# EUROPEAN PATENT APPLICATION

(11) **EP 3 301 800 A1**
(43) Date of publication of application: **04.04.2018**
(21) Application number: 16191874.3
(22) Date of filing: 30.09.2016
(51) Int. Cl.: H02M 3/335, H02J 3/32, H02M 7/66

(54) **A POWER CONVERTER SYSTEM FOR CONNECTION TO AN ELECTRIC POWER DISTRIBUTION GRID**

(71) Applicant: ABB Schweiz AG, 5400 Baden (CH)
(72) Inventor: DELINCE, Francois, 5640 Biesme (BE); BONHOMME, Henri, 6210 Frasnes lez Gosselies (BE); MASSIN, Sebastien, 7050 Masnuy-Saint-Jean (BE)
(74) Representative: Axell, Kristina

(57) **Abstract**

The present disclosure relates to a power converter system (1) for connection to an electric power distribution grid (17), wherein the power converter system (1) comprises: a bidirectional AC/DC converter (3) configured to be connected to the electric power distribution grid (17), a bidirectional DC/DC converter (5) having first terminals configured to be connected to a DC side of the AC/DC converter (3) and second terminals configured to be connected to an energy storage unit (11), and a controller (7) configured to obtain a voltage setpoint value corresponding to a voltage level of the energy storage unit (11) when connected to the second terminals of the DC/DC converter (5), and to control the DC/DC converter (5) to obtain the voltage setpoint value across the second terminals, the controller (7) furthermore being configured to control an energy flow direction through the AC/DC converter (3) and the DC/DC converter (5) based on a present power requirement in the electric power distribution grid (17).

## Description

### TECHNICAL FIELD

The present disclosure generally relates to electric power distribution grids. In particular, it relates to a power converter system for connection to an electric power distribution grid.

### BACKGROUND

Electric power distribution grids are networks configured to deliver electricity to consumers, which are constantly subjected to varying load conditions. The energy consumption pattern in the commercial and residential sectors follows a cycle of peak and low load conditions. Peak load periods coinciding for several consumers can lead to a shortage of power from the supply utilities. This may result in temporary overloading of the network and even lead to tripping of some sensitive loads.

Energy storage systems connectable to the grid may absorb energy from the grid for storage when electrical energy demand is low. The energy stored in an energy storage system may subsequently be injected into the grid when the electrical energy demand increases. By quickly bridging the gap between the demand and supply of electrical power, an energy storage system helps in maintaining the grid frequency and voltages within acceptable limits.

In addition to varying load conditions the unpredictability of green energy sources such as wind and solar plants imposes additional burden on the network operators. Energy storage systems can reduce the impact of green energy sources on the network by offering a "buffer" which can absorb excess power and release the same when the output from these sources falls short.

In order to connect an energy storage system, such a battery storage system to the electric power distribution grid, the energy storage unit voltage level should be matched to the grid alternating voltage (AC) level. Matching the energy storage unit or battery voltage to the grid AC level requires either the use of a step-down or step-up transformer on the AC side or an increase of the battery voltage level on the direct current (DC) side, by using more series connected units.

### SUMMARY

Step-up and step-down transformers provide relatively large losses in the conversion chain from the grid to the energy storage system. Transformers furthermore occupy a large space.

In view of the above, a general object of the present disclosure is to provide a power converter system for connection to an electric power distribution grid which solves or at least mitigates the problems of the prior art.

There is hence according to a first aspect of the present disclosure provided a power converter system for connection to an electric power distribution grid, wherein the power converter system comprises: a bidirectional AC/DC converter configured to be connected to the electric power distribution grid, a bidirectional DC/DC converter having first terminals configured to be connected to a DC side of the AC/DC converter and second terminals configured to be connected to an energy storage unit, and a controller configured to obtain a voltage setpoint value corresponding to a voltage level of the energy storage unit when connected to the second terminals of the DC/DC converter, and to control the DC/DC converter to obtain the voltage setpoint value across the second terminals, the controller furthermore being configured to control an energy flow direction through the AC/DC converter and the DC/DC converter based on a present power requirement in the electric power distribution grid.

The electric power distribution grid is an AC power distribution grid.

With "bidirectional AC/DC converter" is here meant a power converter which is able to convert AC power to DC power when energy flows in a first direction, and to convert DC power to AC power when energy flows in a second direction opposite to the first direction. In the present case, the bidirectional AC/DC converter is configured to convert AC power from the electric power distribution grid to DC power to be fed to the DC/DC converter when energy flows in the first direction. Moreover, the bidirectional AC/DC converter is configured to convert DC power from the DC/DC converter to AC power when energy flows in the second direction.

The present power converter system allows the AC/DC converter to be directly connected to the grid without the need of a step-down or step-up transformer, coupled to an energy storage unit on the DC side with a voltage lower than the peak AC voltage.

Hereto safe use of an energy storage unit with a voltage lower than what the direct grid-connected AC/DC converter requires may be provided. There is an integrated system between the DC side of the AC/DC converter and the energy storage unit, allowing to store and to retrieve energy. The power converter system may be fully integrated in an energy storage system from a control and protection point of view, and is consequently fully transparent for the user.

Avoiding the series connected transformer reduces the losses in the conversion chain, and will therefore improve the efficiency of the system. It also reduces the required hardware space/volume. Avoiding the heavy transformer also reduces the weight of the installation and the vibrations and noise generated within the transformer. It furthermore allows more flexibility on the energy storage unit voltage range. Also in a single phase system, the DC/DC converter is able to reduce the low frequency ripple, the second harmonic, on the energy storage unit current.

According to one embodiment the controller is configured to control the AC/DC converter and the DC/DC converter to enable power to flow from an AC side to the DC side of the AC/DC converter and through the DC/DC converter from the first terminals to the second terminals of the DC/DC converter when receiving a setpoint value indicative of an excessive energy supply to the electric power distribution grid.

According to one embodiment the controller is configured to control the AC/DC converter and the DC/DC converter to enable power to flow from the second terminals of the DC/DC converter through the DC/DC converter to the first terminals and through the AC/DC converter to an AC side of the AC/DC converter when receiving a setpoint value indicative of a shortage of energy supply to the electric power distribution grid.

According to one embodiment the AC/DC converter has a power rating of at most 690 V.

There is according to a second aspect of the present disclosure provided an energy storage system for connection to an electric power distribution grid, comprising: a power converter system according to the first aspect, and an energy storage unit configured to be connected to the second terminals of the DC/DC converter.

As the AC/DC converter is directly connectable to the distribution grid without the use of a step-down transformer for matching the voltage of the energy storage unit on the DC side, a single energy storage system has the full power conversion chain fully integrated and is independent of the distribution grid and energy storage unit voltage.

According to one embodiment the energy storage unit comprises a plurality of series-connected battery units.

According to one embodiment each battery unit has a voltage rating in the order of 1 to 10 V.

According to one embodiment each battery unit is a lithium-ion battery. Other examples of suitable battery units are lead acid, nickel cadmium, sodium nickel chloride, and sodium sulphur batteries.

According to one embodiment each battery unit is a component of an automotive battery or is an automotive battery. Hereto, each battery unit may be a component of a battery designed for the automotive industry, for automotive applications. In particular, the automotive battery may in this context be an electric vehicle (EV) automotive battery.

According to one embodiment at least one of the battery units is a component of a recycled automotive battery or is a recycled automotive battery. When an automotive battery has been used and aged, it will not be able to deliver power peaks as required by an automotive application It has however been found that energy storage components of automotive batteries previously used in automotive applications, with reduced electric characteristics, may be used for energy storage in an energy storage system for electric power distribution grid applications. Components of, or previously used EV automotive batteries may hence in this sense be re-used and recycled in the energy storage system.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a block diagram of an example of a power converter system;
Fig. 2 shows a block diagram of an energy storage system comprising the power converter system in Fig. 1; and
Fig. 3 shows an environment in which the energy storage system may be installed and operated.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure relates to a power converter system configured to be connected to an AC electric power distribution network or grid. The power converter system includes a bidirectional AC/DC converter, which means it can convert AC to DC voltage when energy flows in a first direction and from DC to AC when energy flows in a second direction. The AC/DC converter has grid connection terminals configured to be connected directly to the grid, i.e. without any transformer between the grid and the AC/DC converter.

The power converter system furthermore comprises a bidirectional DC/DC converter configured to be connected to the AC/DC converter. In particular, the DC/DC converter has first terminals configured to be connected to the DC terminals of the AC/DC converter. The DC/DC converter furthermore has second terminals configured to be connected to an energy storage unit, such as a battery.

The power converter system includes a controller configured to set a desired voltage level across the second terminals of the DC/DC converter when an energy storage unit is connected to the second terminals. This desired voltage level is the voltage level of an energy storage unit configured to be connected to the second terminals of the DC/DC converter.

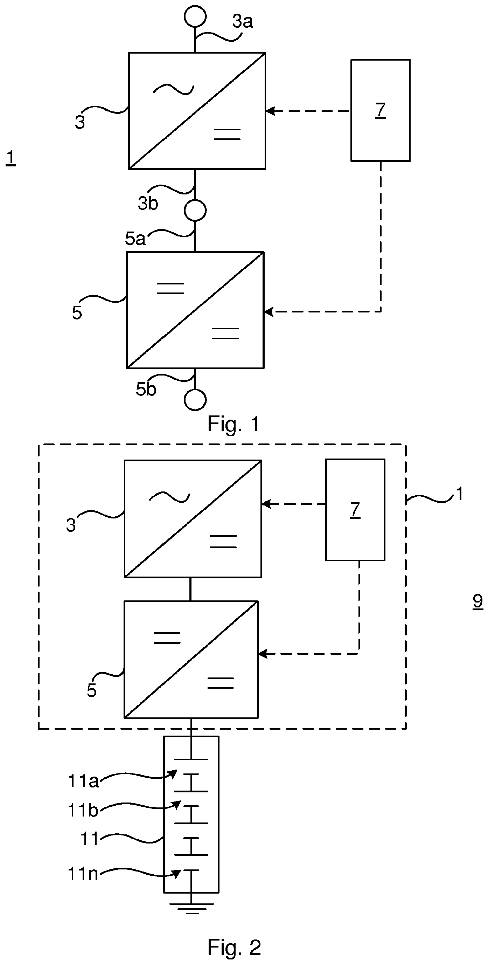

The controller is furthermore configured to control the AC/DC converter and the DC/DC converter. In particular, the controller is configured to control the energy flow direction and the amount of energy flowing through the AC/DC converter and the DC/DC converter based on a present power requirement in the electric power distribution grid, as will be described in more detail below. An example of a power converter system 1 configured to be connected to an electric power distribution grid will now be described with reference to Fig. 1.

The power converter system 1 comprises a bidirectional AC/DC converter 3, a bidirectional DC/DC converter 5 and a controller 7. The AC/DC converter may typically be a three-phase AC/DC converter.

The bidirectional AC/DC converter 3 and the bidirectional DC/DC converter 5 are switchable power converters. Hereto, the rectifying or inverting units of the AC/DC converter 3 and rectifying units of the DC/DC converter 5 are switching units fully controllable by means of the controller 7. The on-state and the off-state of the switching units is thus controllable by means of the controller 7. The switching units may for example be semiconductor switches, for example Insulated Gate Bipolar Transistors (IGBT).

The AC/DC converter 3 has grid connection terminals 3a configured to be connected directly to an electric power distribution grid. The AC/DC converter 3 does hence not have to be connected to an electric power distribution grid via a transformer. The AC/DC converter 3 furthermore has DC terminals 3b configured to be connected to the DC/DC converter 5.

The DC/DC converter 5 has first terminals 5a configured to be connected directly to the DC terminals 3b of the AC/DC converter 3. The DC/DC converter 5 also has second terminals 5b configured to be connected to an energy storage unit.

The controller 7 is configured to control the DC/DC converter 5 such that the voltage across the second terminals 5b obtains a voltage setpoint value corresponding to the voltage of the energy storage unit when the energy storage unit is connected to the second terminals 5b.

The controller 7 may according to one variation be configured to obtain the voltage setpoint value for example from a higher level control system or from a battery management system.

The controller 7 is furthermore configured to control the energy flow direction through the power converter system 1. The controller 7 is configured to receive setpoint values related to the present energy demand in the electric power distribution grid. Hereto, the controller 7 is selectively able to control the voltage levels of the AC/DC converter 3 and/or of the DC/DC converter 5 by suitably switching the switching units of the converters 3 and 5 to ensure that the energy flows either in a first direction from the AC/DC converter 3 to the DC/DC converter 5 to absorb energy from the electric power distribution grid or in a second direction from the DC/DC converter 5 to the AC/DC converter 3 to inject energy from an energy storage unit connected to the second terminals 5b of the DC/DC converter 5 into the electric power distribution grid.

Fig. 2 shows an energy storage system 9 comprising the power converter system 1. The energy storage system 9 hence comprises the AC/DC converter 3 and the DC/DC converter 5. The energy storage system 9 also comprises an energy storage unit 11.

The energy storage unit 11 may for example be a battery or a supercapacitor. The energy storage unit 11 comprises a plurality of series-connected energy units or battery units. According to the present example, the energy storage unit 11 is a battery comprising a plurality of series-connected battery units 11a, 11b,.., 11n. Each battery unit 11a-11n may for example have a voltage rating in the range 1-10V. By series-connecting battery units 11a-11n, a desired battery voltage rating may be obtained.

Each battery unit 11a-11n may according to one variation be a an energy storage component of an automotive battery. The battery units 11a-11n may for example be components of recycled, or previously used, automotive batteries. Each battery unit 11a-11n may for instance be one of a lithium-ion battery, a lead acid battery, a nickel cadmium battery, a sodium nickel chloride battery, a sodium sulphur battery, or any other suitable battery. The controller 7 may be configured to receive battery information from a battery management system regarding the status of the battery or batteries, comprising e.g. voltage level(s) and temperature(s). Alternatively, a higher level control system may be configured to receive the battery information, and creating setpoint values sent to the controller based on the battery information. The controller 7 is thus able to control the DC/DC converter 5 and the voltage level across the second terminals 5b based on the battery information.

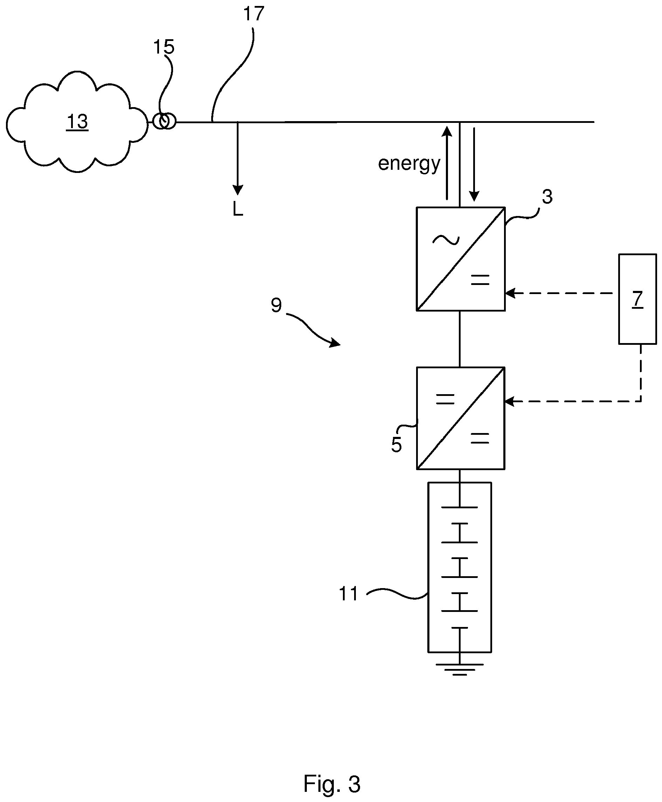

Fig. 3 shows an environment in which the energy storage system 9 may be installed and used. This environment comprises a power transmission grid 13, an electric power distribution grid 17 connected to the power transmission grid 13, and a transformer 15 configured to step down the voltage level of the power transmission grid 13 to a suitable level for the electric power distribution grid 17. The voltage level of the electric power distribution grid 17 may for example be up to 690 V AC, for example 480 V AC or 400 V AC.

A plurality of loads L, or consumers such as households and/or industries, are connected to the electric power distribution grid 17. The energy storage system 9 is also connected to the electric power distribution grid 17. In particular, the AC/DC converter 3 is directly connected to the electric power distribution grid 17, without any transformer arranged between the grid connection terminals 3a and the electric power distribution grid 17.

The DC/DC converter 5 is controlled by the controller 7 so that the voltage across the second terminals 5b matches the voltage of the energy storage unit 11. Typically, the energy storage unit 11 has a voltage rating that is lower than a peak AC voltage of the electrical power distribution grid 17.

In operation, the controller 7 obtains setpoint values related to the present power requirements of the electric power distribution grid 17. These setpoint values may for example be received from a higher level control system. For example, if there is an excessive power supply available to the electric power distribution grid 17, the controller 7 may be configured to control the power level of the AC/DC converter 3 and/or of the DC/DC converter such that the energy flows in a first direction from the grid 17 through the AC/DC converter 3 and the DC/DC converter 5 to the energy storage unit(s) 11 for storage. Thus, in a first control mode, the controller 7 is configured to control the AC/DC converter 3 and the DC/DC converter 5 such that the energy storage unit 11 absorbs energy from the electric power distribution grid 17.

The controller 1 may at a later stage obtain a setpoint value to control the AC/DC converter 3 and/or the DC/DC converter 5 to push energy back into the electric power distribution grid 17 from the energy storage unit(s) 11. In this case, the controller controls the voltage level(s) of the AC/DC converter 3 and/or of the DC/DC converter 5 to enable energy to flow into the electric power distribution grid 17. Thus, in a second control mode, the controller 7 is configured to control the AC/DC converter 3 and/or the DC/DC converter 5 such that the energy storage unit 11 pushes or injects energy into the electric power distribution grid 17.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power converter system (1) for connection to an electric power distribution grid (17), wherein the power converter system (1) comprises:
a bidirectional AC/DC converter (3) configured to be connected to the electric power distribution grid (17),
a bidirectional DC/DC converter (5) having first terminals (5a) configured to be connected to a DC side of the AC/DC converter (3) and second terminals (5b) configured to be connected to an energy storage unit (11), and
a controller (7) configured to obtain a voltage setpoint value corresponding to a voltage level of the energy storage unit (11) when connected to the second terminals (5b) of the DC/DC converter (5), and to control the DC/DC converter (5) to obtain the voltage setpoint value across the second terminals (5b),
the controller (7) furthermore being configured to control an energy flow direction through the AC/DC converter (3) and the DC/DC converter (5) based on a present power requirement in the electric power distribution grid (17).

2. The power converter system (1) as claimed in claim 1, wherein the controller (7) is configured to control the AC/DC converter (3) and the DC/DC converter (5) to enable power to flow from an AC side to the DC side of the AC/DC converter and through the DC/DC converter from the first terminal to the second terminal of the DC/DC converter when receiving a setpoint value indicative of an excessive energy supply to the electric power distribution grid (17).

3. The power converter system (1) as claimed in any of the preceding claims, wherein the controller (7) is configured to control the AC/DC converter (3) and the DC/DC converter (5) to enable power to flow from the second terminal (5b) of the DC/DC converter (5) through the DC/DC converter (5) to the first terminal (5a) and through the AC/DC converter (3) to an AC side of the AC/DC converter (3) when receiving a setpoint value indicative of a shortage of energy supply to the electric power distribution grid (17).

4. The power converter system (1) as claimed in any of the preceding claims, wherein the AC/DC converter (3) has a power rating of at most 6go V.

5. An energy storage system (9) for connection to an electric power distribution grid (17), comprising:
a power converter system (1) as claimed in any of claims 1-4, and
an energy storage unit (11) configured to be connected to the second terminal (5b) of the DC/DC converter (5).

6. The energy storage system (9) as claimed in claim 5, wherein the energy storage unit (11) comprises a plurality of series-connected battery units (11a-11n).

7. The energy storage system (9) as claimed in claim 6, wherein each battery unit (ia-nn) has a voltage rating in the order of 1 to 10 V.

8. The energy storage system (9) as claimed in claim 6 or 7, wherein each battery unit (ia-nn) is a lithium-ion battery.

9. The energy storage system (9) as claimed in any of claims 6-8, wherein each battery unit (ia-nn) is a component of an automotive battery or is an automotive battery.

10. The energy storage system (9) as claimed in claim 9, wherein at least one of the battery units (ia-nn) is a component of a recycled automotive battery or is a recycled automotive battery.
